# EUROPEAN PATENT SPECIFICATION

(11) **EP 4 140 679 B1**
(45) Date of publication and mention of the grant of the patent: **13.05.2026**
(21) Application number: 21192747.0
(22) Date of filing: 24.08.2021
(51) Int. Cl.: B29B 17/02, B29L 9/00, B29L 31/50

(54) **METHOD FOR DETACHING SUBSTRATES BONDED BY POLYURETHANE ADHESIVE**
VERFAHREN ZUM ABLÖSEN VON DURCH POLYURETHANKLEBER VERBUNDENEN SUBSTRATEN
PROCÉDÉ PERMETTANT DE DÉTACHER DES SUBSTRATS COLLÉS PAR UN ADHÉSIF DE POLYURÉTHANE

(43) Date of publication of application: 01.03.2023
(73) Proprietor: Henkel AG & Co. KGaA, 40589 Düsseldorf (DE)
(72) Inventor: Park, Gwanghyun, 604030 Busan (KR); Nam, Arnold Yeonwoo, 49302 Busan (KR)

(56) References cited:
- GB-A- 2 574 260
- JP-A- 2013 173 258
- US-A- 5 421 526
- US-A1- 2010 323 202
- US-A1- 2021 037 916

## Description

The present invention is directed to a method for detaching two substrates bonded by polyurethane adhesive, in particular for detaching shoe parts. In addition, the present invention relates to the use of the method in recycling parts of shoes.

Bonding parts by polyurethane adhesives has found applications in various areas such as aeronautics, aerospace, electronics, automotive, construction, sports and packaging. Polyurethane adhesives can be used to bind various materials such as metals, polymers, ceramics, cork, rubbers, fabrics, etc. However, one of the drawbacks of polyurethane adhesive bonding is its "permanence" character as the bonds are not easy to detach. In most cases, the bonds cannot be detached without destroying the substrates.

Nowadays, the large amount of production of widely used materials e.g. for shoes have created an increasing demand for recyclability, driven by economic and environmental reasons. Thus, the development of new technologies and processes for easy recycling and repairing adhesively bonded assemblies are becoming of great interest for the industry. If the adhesive bonds can be broken without damage of the parts, recycling will be much easier. In addition, from an environmentally friendly point of view, it is necessary to separate the bonds between the bonded substrates so that the different materials can be reused on a qualitatively high level.

As recycling becomes a necessary and global issue, reversible adhesives or debonding on command of the adhesive bonds have been developed.

For example, WO 01/30932 describes a process for the adhesive separation of adhesive bonds. The adhesive bond comprises a heat-softenable thermoplastic adhesive layer or a heat-cleavable thermoset adhesive layer and a primer layer, the primary layer containing nanoscale particles which can be heated by electromagnetic alternating fields.

WO 01/28771 A1 describes a microwave-curable composition containing particles capable of absorbing microwaves with a Curie temperature which is higher than the curing temperature of the composition.

US 2021/0037916 discloses articles of footwear and components for articles of footwear including a debondable adhesive matrix. The debondable adhesive matrix can allow for the bonding and debonding of two substrates in the article of footwear or component thereof. Another method for detaching two substrates bonded by a polyurethane adhesive is know from document GB 2 574 260 A.

However, if used in high demanding applications such as shoes which require excellent adhesion portfolio in bonding strength, impact resistance and application easiness, the methods in prior art have drawbacks of increased cost of the adhesives, insufficient bonding strength and/or impact resistance.

In addition, the prior art methods using special heating equipment also increase the cost and energy.

In view of the existing problems in providing an alternative and/or improved method for detaching an adhesively bonded substrates, there is still need in the art for methods of detaching adhesively bonded substrates which is suitable for the application in industrial scale and obviate the need for cost-intensive treatments.

The present invention is defined by a method for detaching two substrates bonded by a polyurethane adhesive, as defined in claim 1.

In another aspect, the present invention relates to the use of the method as described herein in recycling the parts of shoes, preferably sport shoes.

All percentages given herein in relation to the compositions or formulations relate to % by weight (wt%) relative to the total weight of the respective composition or formulation, if not explicitly stated otherwise.

The present invention is based on the inventor's surprising finding that by using a debonding agent comprising lactic acid to treat polyurethane adhesively bonded substrates at a temperature from 40°C to 90°C, the detachment of the substrates from the adhesive can be well achieved.

As the first step, the method for detaching substrates bonded by a polyurethane adhesive comprises the step of treating two substrates bonded by a polyurethane adhesive with a debonding agent comprising lactic acid at a temperature from 40°C to 90°C.

As used herein, the term "treating" means that the debonding agent contacts at least the interface between the substrate(s) and the adhesive by conventional methods, such as immersing, brushing, spraying, etc. In one preferred embodiment, the two substrates bonded by an adhesive are immersed in the debonding agent.

In one embodiment, the duration of the treatment of substrate(s) by the debonding agent is from 0.5 hour to 240 hours, preferably from 2 hours to 100 hours, and more preferably from 24 hours to 72 hours.

The debonding agent comprises lactic acid, at least one surfactant and water.

Lactic acid is present in the debonding agent in an amount of 1% to 60% by weight, preferably from 5% to 40% by weight based on the weight of the debonding agent.

The debonding agent contains water as solvent, preferably deionized water in an amount of 40 to 99% by weight, preferably 60 to 40% by weight based on the weight of the debonding agent.

Examples of surfactant used as additive in the debonding agent are non-ionic surfactants.

The non-ionic surfactants preferably include alkoxylated, advantageously ethoxylated and/or propoxylated, particularly primary alcohols having preferably 8 to 22 carbon atoms, particularly 8 to 18 carbon atoms, and an average of 1 to 20, preferably 1 to 12 moles alkylene oxide, particularly preferably 5 to 15 moles alkylene oxide, advantageously ethylene oxide (EO), per mole alcohol, in which the alcohol group can be linear or preferably methyl-branched in the 2-position or can comprise linear and methyl branched groups in the mixture, as typically occur in oxo-alcohol groups. Particularly preferred are, however, alcohol ethoxylates with linear groups from alcohols with 8 to 18 carbon atoms, e.g., from isodecyl, or isotridecyl alcohol, and an average of 2 to 8 EO or 5 to 15 EO per mole alcohol. Exemplary preferred ethoxylated alcohols include C₁₀₋₁₄-alcohols with 3 EO or 4 EO, C₉₋₁₄-alcohols with 7 EO, C₁₃₋₁₅-alcohols with 3 EO, 5 EO, 7 EO or 8 EO, C₁₂₋₁₈-alcohols with 3 EO, 5 EO or 7 EO and mixtures thereof, as well as mixtures of C₁₂₋₁₄-alcohols with 3 EO and C₁₂₋₁₈-alcohols with 5 EO. The cited degrees of ethoxylation constitute statistically average values that can be a whole or a fractional number for a specific product. Preferred alcohol ethoxylates have a narrowed homolog distribution (narrow range ethoxylates, NRE).

In addition, substances commonly known to the person skilled in the art as non-ionic emulsifiers can also be considered as non-ionic surfactants. In this context, the non-ionic surfactants comprise, e.g., a polyol group, a polyether group, a polyamine group or a polyamide group or a combination of the above groups as the hydrophilic group. Such compounds are, for example, addition products of C₈-C₂₂-alkyl- mono- and -oligo glycosides and their ethoxylated analogs, addition products of 2 to 30 moles ethylene oxide and/or 0 to 10, particularly 0 to 5 moles propylene oxide to fatty alcohols with 8 to 22 carbon atoms, to fatty acids with 12 to 22 carbon atoms, and to alkyl phenols with 8 to 15 carbon atoms in the alkyl group, C₁₂-C₂₂-fatty acid mono- and diesters of addition products of 1 to 30 moles ethylene oxide on glycerin as well as addition products of 5 to 60 moles ethylene oxide on castor oil and on hydrogenated castor oil.

Weakly foaming non-ionic surfactants that possess alternating ethylene oxide and alkylene oxide units can also be employed. Among these, the surfactants with EO-AO-EO-AO blocks are again preferred, wherein one to ten EO or AO groups respectively are linked together, before a block of the other groups follows. Examples of these are surfactants of the general formula 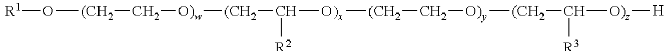 in which R¹ stands for a linear or branched, saturated or mono- or polyunsaturated C₆₋₂₄-alkyl or alkenyl group, each group R² or R³ independently of one another is selected from -CH₃, -CH₂CH₃, -CH₂CH₂-CH₃, -CH(CH₃)₂, and the indices w, x, y, z independently of one another stand for whole numbers from 1 to 6. They can be manufactured by known methods from the corresponding alcohols R¹-OH and ethylene- or alkylene oxide. The group R¹ in the previous formula can vary depending on the origin of the alcohol. When natural sources are used, the group R¹ has an even number of carbon atoms and generally is not branched, the linear alcohols of natural origin with 12 to 18 carbon atoms, for example coconut, palm, tallow or oleyl alcohol, being preferred. The alcohols available from synthetic sources are, for example, Guerbet alcohols or mixtures of methyl branched in the 2-position or linear and methyl branched groups, as are typically present in oxo alcohols. Independently of the type of alcohol employed for the manufacture of the non-ionic surfactants comprised in the agents, inventive agents are preferred, wherein R¹ in the previous formula stands for an alkyl radical with 6 to 24, preferably 8 to 20, particularly preferably 9 to 15 and particularly 9 to 11 carbon atoms. In addition to propylene oxide, especially butylene oxide can be the alkylene oxide unit that alternates with the ethylene oxide unit in the non-ionic surfactants. However, other alkylene oxides are also suitable, in which R² or R³ independently of one another are selected from -CH₂CH₂CH₃ or -CH(CH₃)₂.

In addition, non-ionic block copolymers are considered as non-ionic surfactants, such as, for example, those described in U.S. Pat. No. 6,677,293. Here, for example, they can concern AB-, AA'B-, ABB'-, ABA'- or BAB'-block copolymers, wherein A and A' stand for a hydrophilic block and B and B' for a hydrophobic block. The blocks A and A', independently of one another can be a polyalkylene oxide, particularly a polypropylene oxide or polyethylene oxide, polyvinyl pyridine, polyvinyl alcohol, polymethyl vinyl ether, polyvinyl pyrrolidine or a polysaccharide. The blocks B and B', independently of one another, can be for example an optionally substituted alkyl group that can be obtained for example by polymerizing units selected from the group consisting of 1,3-butadiene, isoprene, all isomers of dimethylbutadiene, 1,3-pentadiene, 2,4-hexadiene, α-methylstyrene, isobutylene, ethylene, propylene or styrene or mixtures thereof. The molecular weights of the blocks A, A', B and B' are preferably, independently of one another, between 500 and 50,000 g/mole. According to the invention, at least one of the blocks A and A' is preferably an alkylene oxide.

Another class of preferred non-ionic surfactants which may be used, either as the sole non-ionic surfactant or in combination with other non-ionic surfactants are alkoxylated, preferably ethoxylated or ethoxylated and propoxylated fatty acid alkyl esters preferably containing 1 to 4 carbon atoms in the alkyl chain, in particular fatty acid methyl esters.

Furthermore, as additional non-ionic surfactants, alkyl glycosides that satisfy the general Formula RO(G)ₓ can also be added, where R means a primary linear or methyl-branched, particularly 2-methyl-branched, aliphatic group containing 8 to 22 and preferably 12 to 18 carbon atoms and G stands for a glycose unit containing 5 or 6 carbon atoms, preferably glucose. The degree of oligomerization x, which defines the distribution of monoglycosides and oligoglycosides, is any number between 1 and 10, preferably between 1.2 and 1.4.

Non-ionic surfactants of the amine oxide type, for example N-cocoalkyl-N,N-dimethylamine oxide and N-tallow alkyl-N,N-dihydroxyethylamine oxide, and the fatty acid alkanolamides, may also be suitable.

Other suitable surfactants are polyhydroxyfatty acid amides corresponding to the following formula, 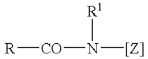 in which RCO stands for an aliphatic acyl group with 6 to 22 carbon atoms, R¹ for hydrogen, an alkyl or hydroxyalkyl group with 1 to 4 carbon atoms and [Z] for a linear or branched polyhydroxyalkyl group with 3 to 10 carbon atoms and 3 to 10 hydroxy groups. The polyhydroxyfatty acid amides are known substances, which may normally be obtained by reductive amination of a reducing sugar with ammonia, an alkylamine or an alkanolamine and subsequent acylation with a fatty acid, a fatty acid alkyl ester or a fatty acid chloride.

The group of polyhydroxyfatty acid amides also includes compounds corresponding to the formula, 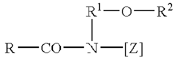 in which R is a linear or branched alkyl or alkenyl group containing 7 to 12 carbon atoms, R' is a linear, branched or cyclic alkyl group or an aryl group containing 2 to 8 carbon atoms and R² is a linear, branched or cyclic alkyl group or an aryl group or an oxyalkyl group containing 1 to 8 carbon atoms, C₁₋₄ alkyl or phenyl groups being preferred, and [Z] is a linear polyhydroxyalkyl group, of which the alkyl chain is substituted by at least two hydroxy groups, or alkoxylated, preferably ethoxylated or propoxylated derivatives of that group.

[Z] is preferably obtained by reductive amination of a reduced sugar, for example glucose, fructose, maltose, lactose, galactose, mannose or xylose. The N-alkoxy- or N-aryloxy-substituted compounds may then be converted into the required polyhydroxyfatty acid amides by reaction with fatty acid methyl esters in the presence of an alkoxide as catalyst.

Further usable non-ionic surfactants are the end capped poly(oxyalkylated) surfactants of the formula R¹O[CH₂CH(R³)O]ₓ[CH₂]ₖCH(OH)[CH₂]ⱼOR² in which R¹ and R² stand for linear or branched, saturated or unsaturated, aliphatic or aromatic hydrocarbon groups with 1 to 30 carbon atoms, R³ stands for H or for a methyl, ethyl, n-propyl, isopropyl, n-butyl, 2-butyl or 2-methyl-2-butyl group, x stands for values between 1 and 30, k and j for values between 1 and 12, preferably 1 to 5. Each R³ in the above formula can be different for the case where x≧2. R¹ and R² are preferably linear or branched, saturated or unsaturated, aliphatic or aromatic hydrocarbon groups containing 6 to 22 carbon atoms, groups containing 8 to 18 carbon atoms being particularly preferred. H, -CH₃ or -CH₂CH₃ are particularly preferred for the radical R³. Particularly preferred values for x are in the range from 1 to 20 and more particularly in the range from 6 to 15.

In a particularly preferred embodiment, the non-ionic surfactants are addition products of alkylene oxide units, particularly ethylene oxide (EO) and/or propylene oxide (PO) units on alkylphenols, wherein the alkyl group of the alkylphenol contains between 6 and 18 carbon atoms, particularly preferably between 6 and 12 carbon atoms, principally 8, 9 or 10 carbon atoms and wherein preferably between 1 and 18 ethylene oxide (EO) units, particularly preferably between 5 and 15 EO units, principally 8, 9 or 10 EO units are added to the alkylphenol group, wherein the cited values are average values and wherein the alkyl group of the alkylphenol can be linear or methyl branched in the 2-position or can comprise linear and methyl branched groups in the mixture, as are typically present in oxoalcohol groups. In a particularly preferred embodiment, the non-ionic surfactant is an addition product of an average of 9 EO units on nonylphenol, wherein the alkyl group and the polyethylene group are preferably positioned meta to one another. A product of this type can be obtained, for example, under the name DISPONIL NP9 (BASF, Germany).

In a further particularly preferred embodiment, the non-ionic surfactant is an addition product of ethylene oxide (EO) units on a fatty alcohol, wherein the fatty alcohol preferably contains between 10 and 22 carbon atoms, particularly preferably between 14 and 20 carbon atoms, principally between 16 and 18 carbon atoms and wherein preferably between 4 and 24 ethylene oxide (EO) units, particularly preferably between 10 and 22 EO units, principally 11, 12, 13, 19, 20 or 21 EO units are added to the fatty alcohol. Particularly preferred products that consist of a C₁₆₋₁₈-alcohol with 12 or 20 EO units are, for example, obtainable under the trade name EUMULGIN B1 or EUMULGIN B2 (BASF, Germany).

In a further particularly preferred embodiment, the non-ionic surfactant is an addition product of ethylene oxide (EO) units on a fatty alcohol, wherein the fatty alcohol preferably contains between 8 and 22 carbon atoms, particularly preferably between 10 and 20 carbon atoms, principally between 12 and 18 carbon atoms and wherein preferably between 3 and 15 ethylene oxide (EO) units, particularly preferably between 5 and 11 EO units, principally 6, 7, 8, 9 or 10 EO units are added to the fatty alcohol. Particularly preferred products that consist of a C₁₂₋₁₈-alcohol with 7 or 9 EO units are, for example, obtainable under the trade name DEHYDOL LT7 and DEHYDOL 100 (BASF, Germany).

In a further particularly preferred embodiment, the non-ionic surfactant is an addition product of ethylene oxide (EO) units on a fatty alcohol, wherein the fatty alcohol preferably contains between 18 and 26 carbon atoms, particularly preferably between 20 and 24 carbon atoms, principally 22 carbon atoms and wherein preferably between 6 and 16 ethylene oxide (EO) units, particularly preferably between 8 and 12 EO units, principally 9, 10 or 11 EO units are added to the fatty alcohol. A particularly preferred product that consists of a C₂₂-alcohol with 10 EO units is, for example, obtainable under the trade name MERGITAL B10 (BASF, Germany).

In a further particularly preferred embodiment, the non-ionic surfactant is an addition product of ethylene oxide (EO) units and propylene oxide units on a fatty alcohol, wherein the fatty alcohol preferably contains between 6 and 18 carbon atoms, particularly preferably between 10 and 16 carbon atoms, principally between 10 and 12 or between 12 and 14 carbon atoms and wherein preferably between 1 and 10, particularly preferably between 3 and 7, principally 4, 5 or 6 EO units as well as preferably between 1 and 10, particularly preferably between 2 and 6, principally 3, 4, 5 or 6 PO units are added to the fatty alcohol. In a preferred embodiment, the non-ionic surfactant herein is a block copolymer, in which preferably the EO units are added to the fatty alcohol and the PO units follow on the EO units and wherein the alkyl group of the fatty alcohol can be linear or methyl-branched in the 2-position or may contain linear and methyl-branched radicals in the form of the mixtures typically present in oxoalcohol groups. A particularly preferred product that consists of a C₁₂-C₁₄-alcohol with 5 EO units and 4 PO units is, for example, obtainable under the name DEHYPPON LS 54 (BASF, Germany). A further particularly preferred product that consists of a C₁₀₋₁₂-alcohol with 5 EO units and 5 PO units is, for example, obtainable under the name BIODAC 2/32 (Sasol, Germany).

In a further inventively preferred embodiment, the non-ionic surfactant is a fluorinated or fluorinecontaining non-ionic surfactant. Here, particularly preferably it is an addition product of alkylene oxide units; particularly ethylene oxide (EO) units and/or propylene oxide units on an alkyl alcohol, wherein the alkyl alcohol preferably contains between 4 and 20 carbon atoms, particularly preferably between 6 and 18 carbon atoms, and wherein preferably between 1 and 18, particularly preferably between 2 and 16 EO units are added to the alkyl alcohol and wherein the compound, preferably the alkyl group, comprises at least one fluorine atom, preferably at least 5 fluorine atoms, especially between 5 and 30 fluorine atoms. In a particularly preferred embodiment, the compound or mixture of compounds is one with the formula F(CF₂)₁₋₇CH₂CH₂O(CH₂CH₂O)₁₋₁₅H. Such a non-ionic surfactant is obtainable for example under the name ZONYL FSO 100 (Dupont, France).

According to the invention, in a particular embodiment, the hydroxyl groups of the abovementioned non-ionic surfactants that carry hydroxyl groups can be partially or completely etherified or esterified. In this regard, there is especially an ether bond to a C₁₋₆ alkyl group, preferably to a methyl, ethyl isopropyl or tert.-butyl group. Preferred ester bonds include those to a C₁₋₆ alkane carboxylic acid, especially to acetic acid or maleic acid.

The debonding agent contains at least one surfactant, in particular non-ionic surfactant, in an amount of 0.5% to 50% by weight, preferably 1% to 40%, and more preferably 1.5% to 10% by weight based on the weight of the debonding agent. Preferably, the debonding agent contains a mixture of two or more non-ionic surfactants.

Preferably, the debonding agent comprises at least 10%, preferably at least 20% of lactic acid and no more than 90%, preferably no more than 80% of water, based on the weight of the debonding agent.

The debonding agent comprises or consists of lactic acid, water, and at least one surfactant. The debonding agent comprises or consists of 1% to 60% by weight, preferably from 5% to 40% by weight of lactic acid, 0.5% to 50% by weight, preferably from 1.5% to 10% by weight of at least one non-ionic surfactant, and 1% to 50% by weight, preferably from 5% to 40% by weight of water, based on the weight of the debonding agent.

In yet another embodiment, the debonding agent essentially comprises no or comprising, based on the weight of the debonding agent, no more than 0.1 wt% of amines, polyalkylene glycols, and/or aliphatic acids other than lactic acid. In one preferred embodiment, the debonding agent comprises no amines, polyalkylene glycols, and aliphatic acids other than lactic acid.

In one embodiment, the debonding agent is in light colour or even colourless. Preferably, the debonding agent is in light colour or even colourless after at least one circle of the debonding method. In other words, the debonding agent is not contaminated by the colour of the sole and upper materials so that it can be repeatedly used in a shoe recycling process.

In another embodiment, the debonding agent has less odor or odorless so that it provides a more friendly condition in a shoe recycling process.

No particular limitations are put on the method of preparing the debonding agent of the present invention, in which the essential components and the optional components are added in any order. In a preferred method of preparation, for instance, the essential components are added to an aqueous solvent, then may be followed by the optional components, and the resultant mixture is agitated at a normal temperature.

The method of the present invention is implemented by bringing the debonding agent as described above into contact with at least one substrate bonded by a polyurethane adhesive. The surface of the substrate(s) and adhesive with which the debonding agent is to be brought into contact is optionally to be cleaned, so that oil, soil, metal powder (occurring due to abrasion or upon forming), and so forth can be separated. Therefore, the method according to the present invention may comprise a step of cleaning the substrates and adhesive before step (1). Cleaning may be carried out in any way, and industrially common cleaning methods including alkali cleaning are available. The substrate and adhesive as cleaned is washed with water to rinse alkaline components and so forth out of the surface thereof, and then the debonding agent of the present invention is brought into contact with the surface.

The treatment of the debonding agent is carried out at a temperature of 40 to 90°C, and preferably 50 to 80°C. If the treatment temperature is lower than 40°C, the debonding of polyurethane adhesive from the substrates may not be achieved.

While dependent on the properties of the substrate material or a base material for substrate, the time for the treatment is generally 0.5 hour to 240 hours, preferably 2 hours to 100 hours, and more preferably 24 hours to 72 hours.

Depending on the structure and complexity of the substrates, the debonding agent may be applied to the bonded substrates by immersion, spraying and/or brushing.

The substrates can be the same or different, and each substrate is selected from the group consisting of metals, polymers, glass, ceramics, cork, fabrics and rubbers. Preferably, the first substrate is selected from thermoplastic polyurethane (TPU), polyamide (PA), polyethylene terephthalate (PET), polybutylene terephthalate (PBT), ethylene-vinyl acetate (EVA), weft-knitted fabric, warp-knitted fabric, woven fabric, non-woven fabric, braided fabric, leather and combination thereof. Also, the second substrate is selected from thermoplastic polyurethane (TPU), polyamide (PA), polyethylene terephthalate (PET), polybutylene terephthalate (PBT), ethylene-vinyl acetate (EVA), weft-knitted fabric, warp-knitted fabric, woven fabric, non-woven fabric, braided fabric, leather and combination thereof. The first substrate and the second substrate can be shoe parts selected from upper, midsole or outsole. In one embodiment, the first substrate is an upper or outsole, and the second substrate is a midsole.

There is no limitation to the polyurethane adhesive treated by the debonding agent in the method according to the present invention. Such polyurethane adhesive is generally the cured product of a reactive or non-reactive polyurethane adhesive or primer compositions. The polyurethane adhesive or primer compositions can be in a system of one-component, two-component or multiple-component, solvent based or solventless, hotmelt or room-temperature curing, as long as they provide sufficient polyurethane bonds between the substrates.

In addition, the method for detaching substrates bonded by an adhesive further comprise a step of (2) separating the substrates from the adhesive.

The separation of the substrates from the adhesive may or may not use external force. For example, the external force may not be necessary when after step (1), the adhesive has been completely separated from the substrate or even dissolved in the debonding agent. However, if at least part of the adhesive is still contacted with any substrate, external force may be used to completely delaminate or separate the adhesive. The external force applied by such as liquid washing or mechanical force is used to compensate for the remaining bonding strength between the adhesive and any substrate.

After step (2), i.e. the adhesive was separated from the substrate, the method according to the present invention may comprise a step of cleaning the substrates and adhesive. Cleaning may be carried out in any way, and industrially common cleaning methods including alkali cleaning are available. The substrate and adhesive as cleaned is washed with water to rinse the debonding agent out of the surface thereof.

The method for detaching the adhesively bonded substrates according to the present invention is suitable for recycling the parts of shoes bonded by polyurethane adhesives and can be implemented in an industrial scale.

It is of course understood that all embodiments disclosed above in connection with the methods of the invention are similarly applicable to the laminates and uses of the invention and vice versa.

The invention is further illustrated by the following examples. Therein, the indicated amounts are by weight, unless otherwise indicated.

### Examples

### Preparation of sample shoe and specimens

A sample shoe was manufactured as follows. A commercial polyurethane adhesive composition used for shoe manufacturing available from Henkel was applied onto pretreated surfaces of a TPU outsole and a midsole consisting of foamed thermoplastic pellets. The applied surfaces were then attached and placed in an oven at 55 to 65°C for 1.5 to 2.5 min. The outsole and midsole pieces were pressed in a water press machine at 23 kg/cm² (1 kg/cm² = 98066.5 Pa) for 12s to obtain a sole part. Afterwards, the other surface of the midsole and a mesh upper to be bonded were applied with a commercial polyurethane adhesive composition used for shoe manufacturing available from Henkel. The applied surfaces were then attached and placed in an oven at 55 to 65°C for 1.5 to 2.5 min. The upper and sole part were pressed in a universal press machine at 35 to 45 kg/cm² for 15s, and then cooled at 0 to 5 °C for 3 to 5 min in a chilling system to obtain a sample shoe having upper, midsole and outsole firmly bonded by polyurethane adhesive. Several pieces of upper part having bonded upper and midsole and sole part having bonded midsole and outsole were then cut by knife and used as specimen for testing.

### Examples 1 to 4 and comparative examples 1 to 4

Lactic acid, polypropylene glycol, dibutyl amine and oleic acid were obtained from Sigma-Aldrich, and the surfactant as additive is a mixture of commercially available non-ionic surfactants. In a glass container, the specimens of bonded upper and midsole (upper part) and/or bonded midsole and outsole (sole part) from the prepared sample shoe were immersed in a debonding agent under a specified temperature. After a certain treatment duration, the debonding result and the coloration of the debonding agent was visually observed. The compositions of the debonding agents (DA 1 to DA 5) are shown in Table 1. Details of the tested shoe specimens, the treating temperature and the treatment duration are shown in Table 2. The test results are also shown in Table 2. If the bonded assembly are completely separated, the debonding result is evaluated as "excellent". If the bonded assembly are partially separated, the debonding result is evaluated as "fair". If the bonded assembly are completely not separated, the debonding result is evaluated as "poor". After the debonding process, if the debonding agent is not colored, the coloration performance is evaluated as "excellent". If the debonding agent is slightly colored, the coloration performance is evaluated as "fair". If the debonding agent is significantly colored, the coloration performance is evaluated as "poor".

**Table 1. Formulations of the debonding agent (in weight percentage)**

| | DA 1 | DA 2 | DA 3 | DA 4 | DA 5 |
|---|---|---|---|---|---|
| Lactic acid | 30 | 35 | - | - | - |
| Polypropylene glycol | - | - | 100 | - | - |
| Dibutyl amine | - | - | - | 30 | - |
| Oleic acid | - | - | - | - | 40 |
| Surfactant | 2 | 2 | - | 2 | 2 |
| Water | Balance | Balance | - | Balance | Balance |

**Table 2. Debonding conditions and results**

| | Ex. 1 | Ex. 2 | Ex. 3 | Ex. 4 |
|---|---|---|---|---|
| Debonding agent | DA 1 | DA 2 | DA 1 | DA 1 |
| Shoe part | Upper part and sole part | Upper part and sole part | Upper part | Sole part |
| Treatment temp. (°C) | 80 | 80 | 50 | 60 |
| Treatment duration (hours) | 48 | 48 | 72 | 72 |
| Debonding result | Excellent | Excellent | Excellent | Excellent |
| Coloration of debonding agent | Excellent | Excellent | Excellent | Excellent |
| Odor | No | No | No | No |

| | CEx. 1 | CEx. 2 | CEx. 3 | CEx. 4 |
|---|---|---|---|---|
| Debonding agent | DA 3 | DA 4 | DA 5 | DA 2 |
| Shoe part | Upper part and sole part | Upper part and sole part | Upper part and sole part | Upper part and sole part |
| Treatment temp. (°C) | 80 | 80 | 80 | 25 |
| Treatment duration (hours) | 24 | 24 | 24 | 24 |
| Debonding result | Poor | Poor | Poor | Poor |
| Coloration of debonding agent | Good | Poor | Good | Excellent |
| Odor | No | Strong | No | No |

As can be seen from Table 2, following the debonding method by using the debonding agent under 40°C to 90°C according to the present invention, the bonded shoe parts made of various materials could be easily separated from polyurethane adhesives. However, the debonding agent comprising polypropylene glycol, dibutyl amine or oleic acid cannot achieve the debonding performance. In addition, the debonding performance will be poor if the treating temperature is lower than 40°C.

## Claims

1. A method for detaching two substrates bonded by a polyurethane adhesive, comprising the steps of:
(1) treating a first substrate and a second substrate bonded by a polyurethane adhesive with a debonding agent comprising lactic acid, at least one surfactant and water at a temperature from 40°C to 90°C, and
(2) separating the first substrate and the second substrate from the polyurethane adhesive,
wherein lactic acid is present in the debonding agent in an amount of 1% to 60% by weight based on the weight of the debonding agent.

2. The method according to claim 1, wherein the surfactant is a non-ionic surfactant.

3. The method according to claim 1 or 2, wherein the treating temperature in step (1) is from 40°C to 80°C.

4. The method according to any one of claims 1 to 3, wherein the first substrate is selected from thermoplastic polyurethane (TPU), polyamide (PA), polyethylene terephthalate (PET), polybutylene terephthalate (PBT), ethylene-vinyl acetate (EVA), weft-knitted fabric, warp-knitted fabric, woven fabric, non-woven fabric, braided fabric, leather and combination thereof.

5. The method according to any one of claims 1 to 4, wherein the second substrate is selected from thermoplastic polyurethane (TPU), polyamide (PA), polyethylene terephthalate (PET), polybutylene terephthalate (PBT), ethylene-vinyl acetate (EVA), weft-knitted fabric, warp-knitted fabric, woven fabric, non-woven fabric, braided fabric, leather and combination thereof.

6. The method according to any one of claims 1 to 5, wherein the first substrate and the second substrate are shoe parts selected from upper, midsole or outsole.

7. The method according to claim 6, wherein the first substrate is an upper or outsole, and the second substrate is a midsole.

8. Use of the method according to any one of claims 1 to 7 in recycling parts of shoes, preferably sport shoes.

## Patentansprüche

1. Verfahren zum Ablösen von zwei Substraten, die durch einen Polyurethanklebstoff gebunden sind, umfassend die Schritte:
(1) Behandeln eines ersten Substrats und eines zweiten Substrats, die durch einen Polyurethanklebstoff gebunden sind, mit einem Entbindungsmittel, umfassend Milchsäure, mindestens ein Tensid und Wasser bei einer Temperatur von 40 °C bis 90 °C, und
(2) Trennen des ersten Substrats und des zweiten Substrats von dem Polyurethanklebstoff, wobei Milchsäure in dem Entbindungsmittel in einer Menge von zu 1 Gew.-% bis 60 Gew.-%, bezogen auf das Gewicht des Entbindungsmittels, vorhanden ist.

2. Verfahren nach Anspruch 1, wobei das Tensid ein nichtionisches Tensid ist.

3. Verfahren nach Anspruch 1 oder 2, wobei die Behandlungstemperatur in Schritt (1) von 40 °C bis 80 °C beträgt.

4. Verfahren nach einem der Ansprüche 1 bis 3, wobei das erste Substrat ausgewählt ist aus thermoplastischem Polyurethan (TPU), Polyamid (PA), Polyethylenterephthalat (PET), Polybutylenterephthalat (PBT), Ethylenvinylacetat (EVA), Kulierwirkware, Kettwirkware, Gewebe, Vlies, Geflechtstoff, Leder und Kombination davon.

5. Verfahren nach einem der Ansprüche 1 bis 4, wobei das zweite Substrat ausgewählt ist aus thermoplastischem Polyurethan (TPU), Polyamid (PA), Polyethylenterephthalat (PET), Polybutylenterephthalat (PBT), Ethylenvinylacetat (EVA), Kulierwirkware, Kettwirkware, Gewebe, Vlies, Geflechtstoff, Leder und Kombination davon.

6. Verfahren nach einem der Ansprüche 1 bis 5, wobei das erste Substrat und das zweite Substrat Schuhteile sind, ausgewählt aus Obermaterial, Zwischensohle oder Außensohle.

7. Verfahren nach Anspruch 6, wobei das erste Substrat eine Ober- oder Außensohle ist und das zweite Substrat eine Mittelsohle ist.

8. Verwendung des Verfahrens nach einem der Ansprüche 1 bis 7 beim Wiederverwerten von Schuhteilen, vorzugsweise Sportschuhen.

## Revendications

1. Procédé de détachement de deux substrats liés par un adhésif de polyuréthane, comprenant les étapes consistant à :
(1) traiter un premier substrat et un second substrat liés par un adhésif de polyuréthane avec un agent de dissociation comprenant de l'acide lactique, au moins un tensioactif et de l'eau à une température allant de 40 °C à 90 °C, et
(2) séparer le premier substrat et le second substrat de l'adhésif de polyuréthane, dans lequel l'acide lactique est présent dans l'agent de dissociation en une quantité de 1 % à 60 % en poids par rapport au poids de l'agent de dissociation.

2. Procédé selon la revendication 1, dans lequel le tensioactif est un tensioactif non ionique.

3. Procédé selon la revendication 1 ou 2, dans lequel la température de traitement à l'étape (1) va de 40 °C à 80 °C.

4. Procédé selon l'une quelconque des revendications 1 à 3, dans lequel le premier substrat est choisi parmi le polyuréthane thermoplastique (TPU), le polyamide (PA), le téréphtalate de polyéthylène (PET), le polybutylène téréphtalate (PBT), l'éthylène-acétate de vinyle (EVA), le tissu tricoté trame, le tissu tricoté chaîne, le tissu, le tissu non tissé, le tissu tressé, le cuir et des combinaisons de ceux-ci.

5. Procédé selon l'une quelconque des revendications 1 à 4, dans lequel le second substrat est choisi parmi le polyuréthane thermoplastique (TPU), le polyamide (PA), le téréphtalate de polyéthylène (PET), le polybutylène téréphtalate (PBT), l'éthylène-acétate de vinyle (EVA), le tissu tricoté trame, le tissu tricoté chaîne, le tissu, le tissu non tissé, le tissu tressé, le cuir et des combinaisons de ceux-ci.

6. Procédé selon l'une quelconque des revendications 1 à 5, dans lequel le premier substrat et le second substrat sont des parties de chaussure choisies parmi la tige, la semelle intermédiaire ou la semelle extérieure.

7. Procédé selon la revendication 6, dans lequel le premier substrat est une semelle supérieure ou extérieure, et le second substrat est une semelle intermédiaire.

8. Utilisation du procédé selon l'une quelconque des revendications 1 à 7, dans le recyclage de parties de chaussures, de préférence de chaussures de sport.
